Europäisches Patentamt

European Patent Office

Office européen des brevets

(19)

(11) **EP 0 980 064 A1**

(12) **EUROPÄISCHE PATENTANMELDUNG**

(43) Veröffentlichungstag:
   **16.02.2000  Patentblatt 2000/07**

(51) Int. Cl.$^7$: **G10L 19/00**

(21) Anmeldenummer: **98810589.6**

(22) Anmeldetag: **26.06.1998**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(71) Anmelder: **Ascom AG**
   **3000 Bern 14 (CH)**

(72) Erfinder: **Juric, Pero**
   **4512 Bellach (CH)**

(74) Vertreter:
   **Roshardt, Werner Alfred, Dipl.-Phys. et al**
   **Keller & Partner**
   **Patentanwälte AG**
   **Zeughausgasse 5**
   **Postfach**
   **3000 Bern 7 (CH)**

(54)  **Verfahren zur Durchführung einer maschinengestützten Beurteilung der Uebertragungsqualität von Audiosignalen**

(57)    Ein Quellsignal (z.B. eine Sprachprobe) wird durch einen Sprachcodierer 1 verarbeitet bzw. übertragen und in ein Empfangssignal (codiertes Sprachsignal) überführt. Quell- und Empfangssignal werden separat einer Vorverarbeitung 2 und einer psychoakustischen Modellierung 3 unterworfen. Es folgt eine Abstandsberechnung 4, welche die Ähnlichkeit der Signale beurteilt. Schliesslich wird eine MOS-Berechnung durchgeführt, um ein mit der menschlichen Bewertung vergleichbares Resultat zu erhalten. Gemäss der Erfindung wird zur Beurteilung der Übertragungsqualität ein spektraler Ähnlichkeitswert bestimmt, welcher auf einer Berechnung der Kovarianz der Spektren von Quellsignal und Empfangssignal und einer Division der Kovarianz durch die Standardabweichungen der beiden genannten Spektren beruht.

   Das Verfahren ermöglicht unter Berücksichtigung des menschlichen Hörvorgangs eine objektive Beurteilung (Sprachqualitäts-Vorhersage).

Fig. 1

EP 0 980 064 A1

**Beschreibung**

**Technisches Gebiet**

Die Erfindung betrifft ein Verfahren zur Durchführung einer maschinengestützten Beurteilung der Übertragungsqualität von Audiosignalen, insbesondere von Sprachsignalen, wobei in einen Frequenzbereich Spektren eines zu übertragenden Quellsignals und eines übertragenen Empfangssignals bestimmt werden.

**Stand der Technik**

Die Beurteilung der Übertragungsqualität von Sprachkanälen gewinnt mit der wachsenden Verbreitung und geografischen Ausdehnung der Mobilfunktelefonie zunehmend an Bedeutung. Gesucht ist ein Verfahren, welches objektiv (d.h. nicht von der Einschätzung einer spezifischen Person abhängig) ist und automatisiert ablaufen kann.

Die perfekte Übertragung von Sprache über einen Telekommunikationskanal im standardisierten Frequenzband 0.3 - 3.4 kHz ergibt eine Satzverständlichkeit von ca. 98%. Die Einführung der digitalen Mobilfunknetze mit Sprachcodierern in den Endgeräten kann aber die Verständlichkeit der Sprache stark beeinträchtigen. Die Ermittlung des Masses der Beeinträchtigung bietet allerdings gewisse Schwierigkeiten.

Sprachqualität ist ein undeutlicher Begriff im Vergleich beispielsweise zur Bitrate, zum Echo oder zur Lautstärke. Da die Kundenzufriedenheit direkt mit der Güte der übertragenen Sprache gemessen werden kann, müssen Codierverfahren bezüglich ihrer Sprachqualität ausgewählt und optimiert werden. Zur Beurteilung eines Sprachcodierverfahrens werden üblicherweise sehr aufwendige auditive Tests durchgeführt. Die Resultate sind dabei kaum reproduzierbar und hängen von der Motivation der Testhörer ab. Daher ist ein instrumenteller Ersatz gesucht, der durch geeignete physikalische Messungen die Sprachgütemerkmale misst, die mit subjektiv erhaltenen Ergebnissen (Mean Opinion Score, MOS) möglichst gut korrelieren.

Aus der EP 0 644 674 A2 ist ein Verfahren zum Beurteilen der Übertragungsqualität einer Sprach-Übertragungsstrecke bekannt, das auf automatischer Ebene eine Beurteilung ermöglicht, die stark mit dem menschlichen Empfinden korreliert. D. h. das System kann eine Bewertung der Übertragungsqualität durchführen und einen Massstab anlegen, wie er von einem geschulten Testhörer angewendet würde. Der Kerngedanke besteht in der Anwendung eines neuronalen Netzwerkes. Dieses wird mit einer Sprachprobe trainiert. Im Endeffekt findet eine integrale Qualitätsbeurteilung statt. Es wird nicht nach den Ursachen der Qualitätseinbusse gefragt.

Moderne Sprachcodierverfahren führen eine Datenkompression durch und benutzen sehr niedrige Bitraten. Deswegen versagen einfache bekannte objektive Verfahren, wie beispielsweise das Signal-Rauschverhältnis (SNR).

**Darstellung der Erfindung**

Aufgabe der Erfindung ist es, ein Verfahren der eingangs genannten Art anzugeben, welches unter Berücksichtigung des menschlichen Hörvorgangs eine objektive Beurteilung (Sprachqualitäts-Vorhersage) ermöglicht.

Die Lösung der Aufgabe ist durch die Merkmale des Anspruchs 1 definiert. Gemäss der Erfindung wird zur Beurteilung der Übertragungsqualität ein spektraler Ähnlichkeitswert bestimmt, welcher auf einer Berechnung der Kovarianz der Spektren von Quellsignal und Empfangssignal und einer Division der Kovarianz durch die Standardabweichungen der beiden genannten Spektren beruht.

Tests mit einer Reihe von bewerteten Sprachproben und dem zugehörigen auditiven Urteil (MOS) haben gezeigt, dass auf der Basis des erfindungsgemässen Verfahrens eine sehr hohe Korrelation mit den auditiven Werten erzielt werden kann. Im Vergleich mit der bekannten auf einem neuronalen Netz basierenden Methode hat das vorliegende Verfahren folgende Vorteile:

- Geringerer Bedarf an Speicher- und CPU-Mittel. Dies ist wichtig für eine Echtzeitimplementierung.

- Kein aufwendiges Systemtraining für den Einsatz neuer Sprachproben.

- Keine suboptimale systemimmanente Referenz. Die beste Sprachqualität, die mit diesem Mass gemessen werden kann, entspricht derjenigen der Sprachprobe.

Vorzugsweise wird der spektrale Ähnlichkeitswert mit einem Faktor gewichtet, welcher in Abhängigkeit vom Verhältnis der Energien der Spektren von Empfangs- zu Quellsignal den Ähnlichkeitswert stärker reduziert, wenn die Energie des Empfangssignals grösser ist als diejenige des Quellsignals als wenn die Energie des Empfangssignals kleiner ist. Auf diese Weise werden zusätzliche Signalinhalte im Empfangssignal stärker negativ gewichtet als fehlende Signalinhalte.

Grundsätzlich kann die Erfindung für beliebige Audiosignale angewendet werden. Enthalten die Audiosignale inaktive Phasen (wie es bei Sprachsignalen typischerweise der Fall ist), empfiehlt es sich, die Qualitätsbeurteilung für aktive und inaktive Phasen getrennt durchzuführen. Signalabschnitte, deren Energie eine vorgegebene Schwelle überschreiten, werden der aktiven Phase zugeordnet, die übrigen Abschnitte werden als Pausen (inaktive Phasen) eingestuft. Die weiter oben beschriebene spektrale Ähnlichkeit wird nur für die aktiven Phasen berechnet.

Für die inaktiven Phasen (z.B. die Sprachpausen) kann eine Qualitätsfunktion angewendet werden, welche in Abhängigkeit von der Pausenenergie degressiv abnimmt:

$$A^{\frac{\log 10(Epa)}{\log 10(E\max)}}$$

A ist eine geeignete gewählte Konstante, Emax ist der größtmögliche Wert der Pausenenergie.

Die Gesamtqualität der Übertragung (d.h. die eigentliche Übertragungsqualität) ergibt sich aus einer gewichteten Linearkombination der Qualitäten der aktiven und der inaktiven Phase. Die Gewichtungsfaktoren hängen dabei vom Anteil der aktiven Phase am Gesamtsignal ab, und zwar in einer nicht-linearen, die aktive Phase bevorzugenden Weise. Bei einem Anteil von z.B. 50% kann die Qualität der aktiven Phase in der Grössenordnung von z.B. 90% liegen.

Pausen bzw. Störungen in den Pausen werden also separat und weniger stark als aktive Signalphasen beachtet. Dies trägt der Erkenntnis Rechnung, dass in Pausen im wesentlichen keine Information übertragen wird, dass es aber trotzdem als unangenehm empfunden wird, wenn in den Pausen Störungen auftreten.

Gemäss einer besonders bevorzugten Ausführungsform werden die zeitlichen Abtastwerte von Quell- und Empfangssignal in Datenrahmen zusammengefasst, welche einander um einige Millisekunden bis zu einigen Dutzend Millisekunden überlappen (z.B. 16 ms). Diese Überlappung bildet - zumindest teilweise - die dem menschlichen Hörsystem inhärente zeitliche Maskierung nach.

Eine weitgehend realistische Nachbildung der zeitlichen Maskierung ergibt sich dann, wenn zusätzlich - nach der Transformation in den Frequenzbereich - zum Spektrum des aktuellen Rahmens das abgeschwächte Spektrum des vorhergehenden addiert wird. Die spektralen Komponenten werden dabei vorzugsweise unterschiedlich gewichtet. Niederfrequente Komponenten des vorangegangenen Rahmens werden stärker gewichtet als höherfrequente.

Es empfiehlt sich, vor der Durchführung der zeitlichen Maskierung eine Kompression der Spektralkomponenten vorzunehmen, indem diese mit einem Wert $\alpha < 1$ (z.B. $\alpha = 0.3$) potenziert werden. Treten nämlich in einem Frequenzband gleichzeitig mehrere Frequenzen auf, erfolgt beim auditiven System eine Überreaktion, d.h. die Gesamtlautstärke wird als grösser als diejenige der Summe der einzelnen Frequenzen empfunden. Im Endeffekt bedeutet dies eine Kompression der Komponenten.

Eine weitere Massnahme, um eine gute Korrelation zwischen den Beurteilungsergebnissen des erfindungsgemässen Verfahrens und der subjektiven menschlichen Wahrnehmung zu erreichen, besteht darin, das Spektrum eines Rahmens mit einer asymmetrischen "Verschmierungsfunktion" zu falten. Diese mathematische Operation wird sowohl auf das Quell- als auch auf das Empfangssignal angewendet und zwar vor dem Bestimmen der Ähnlichkeit.

Die Verschmierungsfunktion ist in einem Frequenz-Lautheits-Diagramm vorzugsweise eine Dreiecksfunktion, deren linke Flanke steiler als deren rechte ist.

Vor der Faltung können die Spektren zusätzlich expandiert werden durch Potenzierung mit einem Wert $\varepsilon > 1$ (z.B. $\varepsilon = 4/3$). Damit wird die dem menschlichen Ohr charakteristische Lautheitsfunktion simuliert.

Aus der nachfolgenden Detailbeschreibung und der Gesamtheit der Patentansprüche ergeben sich weitere vorteilhafte Ausführungsformen und Merkmalskombinationen der Erfindung.

## Kurze Beschreibung der Zeichnungen

Die zur Erläuterung des Ausführungsbeispiels verwendeten Zeichnungen zeigen:

Fig. 1    ein grobes Blockschaltbild zur Erläuterung des Prinzips der Verarbeitung;

Fig. 2    ein Blockschaltbild der einzelnen Verfahrensschritte zur Durchführung der Qualitätsbeurteilung;

Fig. 3    ein Beispiel eines Hamming-Fensters;

Fig. 4    eine Darstellung der Gewichtungsfunktion zur Berechnung der Frequenz-Tonheit-Konvertierung;

Fig. 5    eine Darstellung des Frequenzgangs des Telefonfilters;

Fig. 6      eine Darstellung der Kurven gleicher Lautstärke für das ebene Schallfeld (Ln ist die Lautstärke und N die Lautheit);

Fig. 7      eine schematische Darstellung der zeitlichen Maskierung;

Fig. 8      eine Darstellung der Lautheitsfunktion (sone) in Abhängigkeit des Schallpegels (phon) eines 1 KHz-Tones;

Fig. 9      eine Darstellung der Verschmierungsfunktion;

Fig. 10      eine grafische Darstellung des Sprachkoeffizienten als Funktion des Sprachanteils im Quellsignal;

Fig. 11      eine grafische Darstellung der Qualität in der Pausenphase als Funktion der Sprachenergie in der Pausenphase;

Fig. 12      eine grafische Darstellung der Gain-Konstante als Funktion des Energieverhältnisses;

Fig. 13      eine grafische Darstellung der Gewichtungskoeffizienten zur Implementierung der zeitlichen Maskierung in Abhängigkeit von der Frequenzkomponente.

Grundsätzlich sind in den Figuren gleiche Teile mit gleichen Bezugszeichen versehen.

**Wege zur Ausführung der Erfindung**

Im folgenden wird ein konkretes Ausführungsbeispiel im einzelnen anhand der Figuren erläutert.

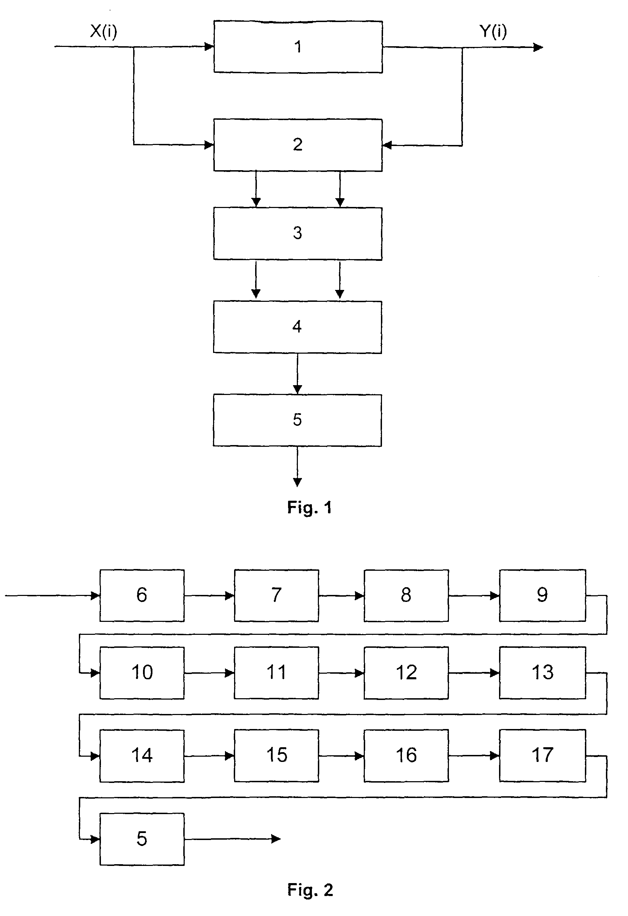

Fig. 1 zeigt das Prinzip der Verarbeitung. Als Quellsignal x(i) wird eine Sprachprobe verwendet. Es wird durch den Sprachcodierer 1 verarbeitet bzw. übertragen und in ein Empfangssignal y(i) (codiertes Sprachsignal) überführt. Die genannten Signale liegen in digitaler Form vor. Die Abtastfrequenz beträgt z.B. 8 kHz und die digitale Quantisierung 16 Bit. Datenformat ist vorzugsweise PCM (ohne Kompression).

Quell- und Empfangssignal werden separat einer Vorverarbeitung 2 und einer psychoakustischen Modellierung 3 unterworfen. Es folgt eine Abstandsberechnung 4, welche die Ähnlichkeit der Signale beurteilt. Schliesslich wird eine MOS Berechnung 5 durchgeführt, um ein mit der menschlichen Bewertung vergleichbares Resultat zu erhalten.

Fig. 2 verdeutlicht die im folgenden detailliert beschriebenen Abläufe. Quellsignal und Empfangssignal erfahren den selben Verarbeitungsweg. Der Einfachheit halber ist der Prozess nur einmal gezeichnet worden. Es ist aber klar, dass die beide Signale bis zur Bestimmung des Abstandsmasses separat behandelt werden.

Das Quellsignal basiert auf einem Satz, der so gewählt ist, dass seine Lauthäufigkeitsstatistik der gesprochenen Sprache möglichst gut entspricht. Um das Kontext-Hören zu unterbinden, verwendet man sinnleere Silben, sogenannte Logatome. Die Sprachprobe soll einen möglichst konstanten Sprachpegel besitzen. Die Länge der Sprachprobe liegt zwischen 3 und 8 Sekunden (typisch 5 Sekunden).

Signalvorbereitung: In einem ersten Schritt wird das Quellsignal in den Vektor x(i) und das Empfangssignal in den Vektor y(i) eingelesen. Die beiden Signale müssen zeit- und pegelmässig synchronisiert werden. Dann wird die Gleichstromkomponente entfernt, indem von jedem Abtastwert der Mittelwert abgezogen wird:

$$x(i) = x(i) - \frac{1}{N}\sum_{k=1}^{N}x(k) \qquad y(i) = y(i) - \frac{1}{N}\sum_{k=1}^{N}y(k) \qquad (1)$$

Weiter werden die Signale auf gemeinsame RMS (**R**oot **M**ean **S**quare)-Pegel normalisiert, weil der konstante Verstärkungsfaktor im Signal nicht berücksichtigt wird:

$$x(i) = x(i) \cdot \frac{1}{\sqrt{\frac{1}{N}\sum_{k=1}^{N}x(k)^2}} \qquad y(i) = y(i) \cdot \frac{1}{\sqrt{\frac{1}{N}\sum_{k=1}^{N}y(k)^2}} \qquad (2)$$

Als nächstes kommt die Rahmen-Bildung: Beide Signale werden in Segmente der Länge 32 ms aufgeteilt (256 Abtastwerte bei 8 kHz). Diese Rahmen sind die Verarbeitungseinheiten in allen späteren Verarbeitungsschritten. Die Rahmenüberlappung beträgt vorzugsweise 50% (128 Abtastwerte).

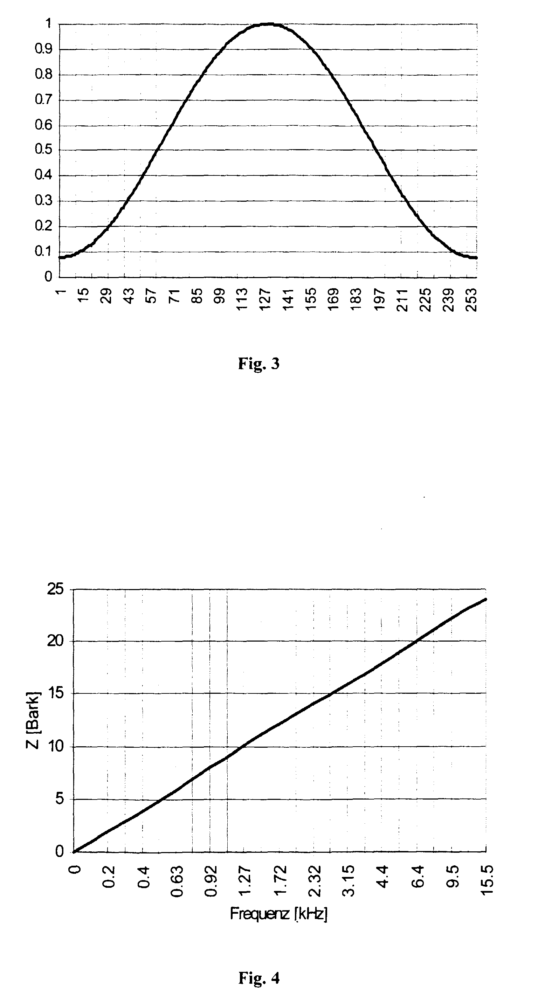

Nun folgt die Hamming-Fensterung 6 (vgl. Fig. 2). In einem ersten Verarbeitungsschritt wird der Rahmen einer zeitlichen Gewichtung unterzogen. Es wird ein sog. Hamming -Fenster (Fig. 3) generiert, mit welchem die Signalwerte eines Rahmens multipliziert werden.

$$hamm(k) = 0.54 - 0.46 \cdot \cos\left(\frac{2\pi(k-1)}{255}\right), \quad 1 \le k \le 255 \tag{3}$$

Aufgabe der Fensterung ist es, ein zeitlich unbegrenztes Signal in ein zeitlich begrenztes Signal zu überführen, indem das zeitlich unbegrenzte Signal mit einer Fensterfunktion multipliziert wird, die ausserhalb eines gewissen Bereiches verschwindet (gleich Null ist).

$$x(i) = x(i) * hamm(i), \quad y(i) = y(i) * hamm(i), \quad\quad 1 \le i \le 255 \tag{4}$$

Das Quellsignal x(t) in der Zeitdomäne wird jetzt mittels diskreter Fourier-Transformation (Fig. 2: DFT 7) in die Frequenzdomäne überführt. Für eine zeitdiskrete Wertefolge x(i) mit i=0,1,2,....,N-1, die durch die Fensterung entstanden ist, lautet die komplexe Fourier-Transformierte *C(j)* für das Quellsignal x(i) bei der Periode N:

$$c_x(j) = \sum_{n=0}^{N-1} x(i) \cdot \exp\left(-j \cdot \frac{2\pi}{N} \cdot n \cdot j\right) \quad 0 \le j \le N-1 \tag{5}$$

Dasselbe wird für das kodierte Signal bzw. Empfangssignal y(i) gemacht:

$$c_y(j) = \sum_{n=0}^{N-1} y(i) \cdot \exp\left(-j \cdot \frac{2\pi}{N} \cdot n \cdot j\right) \quad 0 \le j \le N-1 \tag{6}$$

Im nächsten Schritt wird der Betrag des Spektrums berechnet (Fig.2: Betragsbildung 8). Mit Index **x** ist immer das Quellsignal bezeichnet und mit **y** das Empfangssignal:

$$Px_j = \sqrt{c_x(j) \cdot conjg(c_x(j))}, \quad Py_j = \sqrt{c_y(j) \cdot conjg(c_y(j))} \tag{7}$$

Nun wird eine Einteilung in die kritischen Frequenzbänder vorgenommen (Fig. 2: Bark-Transformation 9).

Hier wird ein angepasstes Modell von E. Zwicker, Psychoakustik, 1982, eingesetzt. Die Basiliarmembrane im menschlichen Ohr teilt das Frequenzspektrum in kritische Frequenzgruppen ein. Diese Frequenzgruppen spielen eine wichtige Rolle bei der Lautstärkenempfindung. Bei tiefen Frequenzen haben die Frequenzgruppen eine konstante Bandbreite von 100 Hz, bei Frequenzen oberhalb 500 Hz steigt sie proportional mit der Frequenz (sie beträgt etwa 20% der jeweiligen Mittenfrequenz). Dies entspricht angenähert den Eigenschaften des menschlichen Gehörs, welches die Signale auch in Frequenzbändern verarbeitet, allerdings sind diese Bänder variabel, d.h. deren Mittenfrequenz richtet sich nach dem jeweiligen Schall-Ereignis.

Die folgende Tabelle zeigt den Zusammenhang zwischen Tonheit z, Frequenz f, Frequenzgruppenbreite ΔF, sowie FFT-Index. Die FFT-Indices entsprechen der FFT-Auflösung von 256. Nur die Bandbreite 100-4000 Hz ist interessant für die weitere Berechnung.

| Z [Bark] | F(low) [Hz] | ΔF [Hz] | FFT Index |
|---|---|---|---|
| 0 | 0 | 100 | |
| 1 | 100 | 100 | 3 |
| 2 | 200 | 100 | 6 |
| 3 | 300 | 100 | 9 |
| 4 | 400 | 100 | 13 |
| 5 | 510 | 110 | 16 |
| 6 | 630 | 120 | 20 |
| 7 | 770 | 140 | 25 |
| 8 | 920 | 150 | 29 |
| 9 | 1080 | 160 | 35 |
| 10 | 1270 | 190 | 41 |
| 11 | 1480 | 210 | 47 |
| 12 | 1720 | 240 | 55 |
| 13 | 2000 | 280 | 65 |
| 14 | 2320 | 320 | 74 |
| 15 | 2700 | 380 | 86 |
| 16 | 3150 | 450 | 101 |
| 17 | 3700 | 550 | 118 |
| 18 | 4400 | 700 | |
| 19 | 5300 | 900 | |
| 20 | 6400 | 1100 | |
| 21 | 7700 | 1300 | |
| 22 | 9500 | 1800 | |
| 23 | 12000 | 2500 | |
| 24 | 15500 | 3500 | |

Die hier angewandten Fenster stellen eine Vereinfachung dar. Alle Frequenzgruppen haben die Breite ΔZ(z) von 1 Bark. Die Tonheitsskala **z** in Bark wird gemäss folgender Formel berechnet:

$$Z = 13 \cdot \arctan\left(0.76 \cdot f\right) + 3.5 \cdot \arctan\left[\left(\frac{f}{7.5}\right)^2\right], \tag{8}$$

wobei **f** in [kHz] und **Z** in [Bark].

Eine Tonheitsdifferenz von einem Bark entspricht ungefähr einem Abschnitt von 1.3 Millimetern auf der Basiliarmembran (150 Haarzellen). Die eigentliche Frequenz-Tonheit-Konvertierung kann einfach nach der folgenden Formel gemacht werden:

$$Px_i{}'[j] = \frac{1}{\Delta f_j} * \sum_{I_f[j]}^{I_l[j]} q(f) * Px_i[k] \, , \quad Py_i{}'[j] = \frac{1}{\Delta f_j} * \sum_{I_f[j]}^{I_l[j]} q(f) * Py_i[k] \quad (9)$$

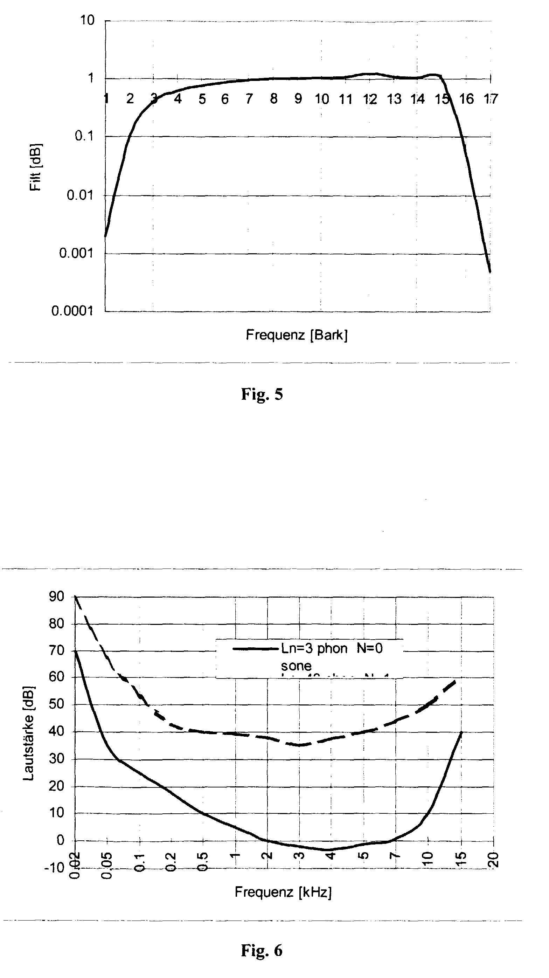

wobei $I_f[j]$ der Index vom ersten und $I_l[j]$ vom letzten Sample auf der Hertz-Skala für Band j ist. $\Delta f_j$ bezeichnet die Bandbreite im Band j in Hertz. $q(f)$ ist die Gewichtungsfunktion (Fig. 5). Da die Diskrete Fourier-Transformation nur Werte des Spektrums an diskreten Stellen (Frequenzen) liefert, liegen die Bandgrenzen jeweils auf einer solchen Frequenz. Die Werte an den Bandgrenzen werden in jedem der benachbarten Fenster nur je halb gewichtet. Die Bandgrenzen liegen auf N*8000/256 Hz.

N = 3, 6, 9, 13, 16, 20, 25, 29, 35, 41, 47, 55, 65, 74, 86, 101, 118

Für die Telefonie-Bandbreite 0.3 - 3.4 kHz werden 17 Werte auf der Tonheitsskala benutzt, die dann der Erregung entsprechen. Von den resultierenden 128 FFT-Werten werden die ersten 2, welche dem Frequenzbereich 0 Hz bis 94 Hz, und die letzten 10, welche dem Frequenzbereich 3700 Hz bis 4000 Hz entsprechen, weggelassen.

Beide Signale werden jetzt mit einem Filter gefiltert, dessen Frequenzgang der Empfangskurve des entsprechenden Telefon-Sets entspricht (Fig. 2: Telefonband-Filterung 10):

$$Pfx_i[j] = Filt[j] \cdot Px_i{}'[j] \, , \qquad Pfy_i[j] = Filt[j] \cdot Py_i{}''[j] \qquad (10)$$

wo $Filt[j]$ die Frequenzantwort im Band j des Frequenzganges des Telefongerätes ist (definiert gemäss ITU-T Empfehlung Annex D/P.830).

In Fig. 5 sind die Werte (logarithmisch) eines solchen Filters grafisch dargestellt.

Optional können noch die Phon-Kurven berechnet werden (Fig. 2: Phon-Kurven-Berechnung 11). Dazu folgendes:

Als Lautstärke eines beliebigen Schalles ist derjenige Pegel eines 1 kHz-Tones bezeichnet, der bei frontalem Einfall auf die Versuchsperson in einer ebenen Welle die gleiche Lautstärkenempfindung bewirkt wie der zu messende Schall (vgl. E. Zwicker, Psychoakustik, 1982). So spricht man über die Kurven gleicher Lautstärke für verschiedene Frequenzen. Diese Kurven sind in Fig. 6 dargestellt.

In Fig. 6 sieht man z. B., dass ein 100 Hz-Ton bei einer Pegellautstärke von 3 phon einen Schallpegel von 25 dB besitzt. Der gleiche Ton besitzt jedoch für einen Lautstärkepegel von 40 phon einen Schallpegel von 50 dB. Man sieht auch, dass z. B. für einen 100 Hz-Ton der Schallpegel 30 dB stärker sein muss als für einen 4 kHz-Ton, damit beide eine gleiche Lautheit im Ohr erzeugen können. Eine Annäherung im erfindungsgemässen Modell wird erreicht, indem die Signale *Px* und *Py* mit einer komplementären Funktion multipliziert werden.

Da das menschliche Gehör beim gleichzeitigen Auftreten mehrerer Spektral-Anteile in einem Band überreagiert d.h. die Gesamtlautstärke als grösser als die lineare Summe der einzelnen Lautstärken empfindet, werden die Einzel-Spektralanteile komprimiert. Die komprimierte spezifische Lautheit hat die Einheit 1 Sone. Zur Durchführung der Phon-Sone-Transformation 12 (vgl. Fig. 2) wird im vorliegenden Fall die Erregung in Bark mit einem Exponent $\alpha$ = 0.3 komprimiert:

$$Px_i{}'[j] = \left( Pfx_i{}'[j] \right)^\alpha \, , \quad Py_i{}'[j] = \left( Pfy_i{}'[j] \right)^\alpha \qquad (11)$$

Ein wichtiger Aspekt des bevorzugten Ausführungsbeispiels ist die Modellierung der zeitlichen Verdeckung.

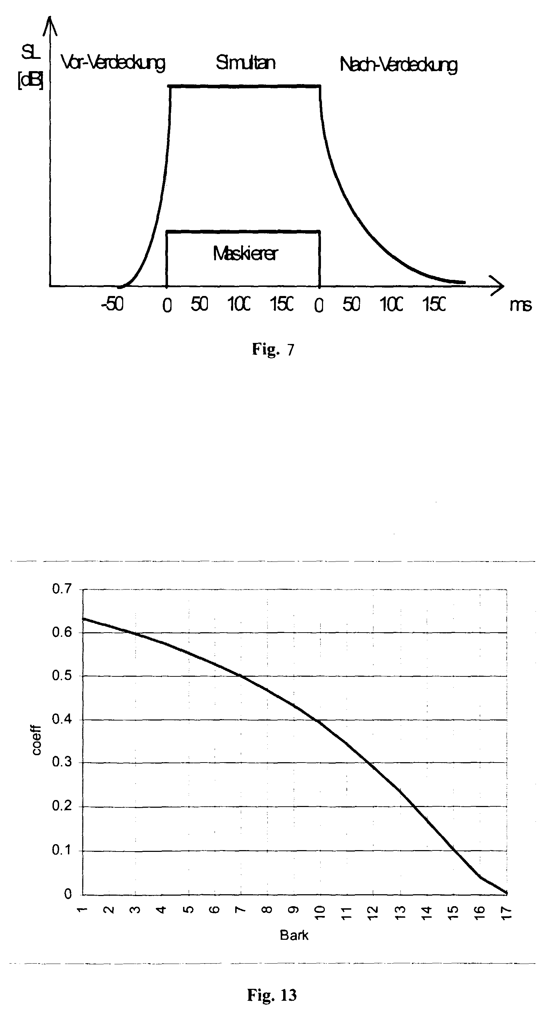

Das menschliche Ohr ist unfähig, zwei kurze Testschalle, die kurz nacheinander ankommen, zu unterscheiden. Die zeitabhängigen Vorgänge zeigt Fig. 7. Ein Maskierer von 200 ms Dauer verdeckt einen kurzen Tonimpuls. Der Zeitpunkt, wo der Maskierer beginnt, ist mit 0 bezeichnet. Links ist die Zeit negativ. Die zweite Zeitskala beginnt dort, wo der Maskierer endet. Es sind drei Zeitbereiche zu sehen. Vorverdeckung findet statt, bevor der Maskierer eingeschaltet wird. Unmittelbar danach ist die Simultanverdeckung und nach dem Ende des Maskierers ist die Nachverdeckungsphase. Für die Nachverdeckung gibt es eine logische Erklärung (Ausklingen). Die Vorverdeckung findet schon vor Einschalten des Maskierers statt. Die Hörempfindungen treten nicht sofort auf. Es wird eine Verarbeitungszeit benötigt, um die Empfindung zu erzeugen. Einem lauten Schall wird eine schnelle Verarbeitung zuerkannt und einem leisen Schall an der Hörschwelle eine längere Verarbeitungszeit. Die Vorverdeckung dauert etwa 20 ms und die Nachverdeckung 100 ms. Daher ist die Nachverdeckung der dominante Effekt. Die Nachverdeckung hängt von der Maskiererdauer und dem Spektrum des verdeckenden Schalles ab.

Eine grobe Annäherung der zeitlichen Verdeckung ist bereits durch die Rahmenüberlappung in der Signal-Vorverarbeitung erreicht. Bei der Rahmenlänge von 32 ms (256 Abtastwerte und 8 kHz Abtastfrequenz) ist die Überlappungszeit 16 ms (50%). Dies reicht für mittlere und hohe Frequenzen. Für tiefe Frequenzen ist diese Verdeckung viel länger (> 120 ms). Dieses wird nun als das Addieren des abgeschwächten Spektrums des vorangehenden Rahmens implementiert (Fig. 2: Zeitliche Verdeckung 15). Die Abschwächung ist dabei in jedem Frequenzband unterschiedlich:

$$Px_i''[j] = \frac{\left(Px_i'[j] + Px_{i-1}'[j] * coeff(j)\right)}{1 + coeff(j)} , \quad Py_i''[j] = \frac{\left(Py_i'[j] + Py_{i-1}'[j] * coeff(j)\right)}{1 + coeff(j)} \quad (12)$$

wo coeff(j) die Gewichtungs-Koeffizienten sind, die nach folgender Formel berechnet werden:

$$coeff(j) = \exp\left(\frac{-\dfrac{FrameLength}{(2 \cdot Fc)}}{((2 \cdot NrOfBarks + 1) - 2 \cdot (j-1)) \cdot \eta}\right),$$

$$j = 1, 2, 3, \ldots, NrOfBarks \qquad (13)$$

wo *FrameLength* die Rahmenlänge in Abtastwerten ist z.B. 256, *NrOfBarks* ist die Anzahl Bark-Werte innerhalb eines Rahmens (hier z.B. 17). *Fc* ist die Abtastfrequenz und η = 0.001.

Die Gewichtungskoeffizienten zur Implementierung der zeitlichen Maskierung in Abhängigkeit von der Frequenzkomponente sind beispielhaft in Fig. 13 dargestellt. Es ist deutlich erkennbar, dass die Gewichtungskoeffizienten mit zunehmendem Bark-Index (d.h. mit steigender Frequenz) abnehmen.

Zeitliche Verdeckung wird hier nur als Nachverdeckung realisiert. Die Vorverdeckung ist in diesem Kontext vernachlässigbar.

In einer weiteren Verarbeitungsphase werden die Spektren der Signale "verschmiert" (Fig. 2: Frequenzverschmierung 13). Dies vor dem Hintergrund, dass das menschliche Ohr unfähig ist, zwei Frequenzkomponenten, die nebeneinander stehen, deutlich zu unterscheiden. Der Grad der Frequenzverschmierung hängt von den betroffenen Frequenzen, deren Amplituden und anderen Faktoren ab.

Die Empfindungsgrösse des Ohres ist die Lautheit. Sie sagt wievielmal ein zu messender Schall lauter oder leiser als ein Standardschall ist. Die so gefundene Empfindungsgrösse wird als Verhältnislautheit bezeichnet. Als Standardschall hat sich der Schallpegel eines 1 kHz-Tones bewährt. Dem 1 kHz-Ton mit einem Pegel von 40 dB wurde die Lautheit 1 sone zugeordnet. In E. Zwicker, Psychoakustik, 1982, wird folgende Definition der Lautheitsfunktion beschrieben:

$$Lautheit = 2^{\frac{L_{1kHz}-40}{10}} \quad [dB]$$

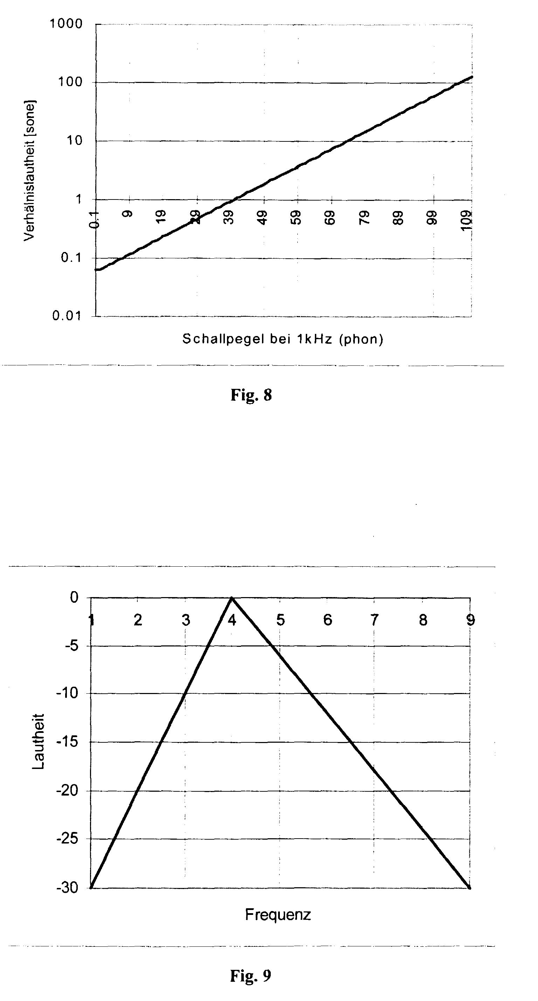

Fig. 8 zeigt eine Lautheitsfunktion (sone) für den 1 kHz-Ton als Funktion des Schallpegels (phon).

Im Rahmen des vorliegenden Ausführungsbeispiels wird diese Lautheitsfunktion wie folgt angenähert:

$$Px_i^{''}[j] = \left(Px_i^{'}[j]\right)^{\varepsilon}, \quad Py_i^{''}[j] = \left(Py_i^{'}[j]\right)^{\varepsilon} \tag{14}$$

wo $\varepsilon=4/3$.

Das Spektrum wird an dieser Stelle expandiert (Fig. 2: Lautheitsfunktionskonversion 14).

Das nun vorliegende Spektrum wird mit einer diskreten Folge von Faktoren gefaltet (Convolution). Das Resultat entspricht einem Verschmieren des Spektrums über die Frequenzachse. Convolution von zwei Sequenzen $x$ und $y$ entspricht der relativ komplizierten Faltung der Sequenzen im Zeitbereich oder dem Multiplizieren deren Fourier-Transformierten. Im Zeitbereich lautet die Formel:

$$c = conv(x,y), \qquad c(k) = \sum_{j=0}^{n-1} x(j) \cdot y(k+1-j), \tag{15}$$

wo $m$ die Länge der Sequenz $x$ und $n$ die Länge der Sequenz $y$ ist. *Das* Resultat c hat die Länge k=m+n-1 . j = max(1, k+1-n) : min(k,m).

Im Frequenzbereich:

$$conv(x,y) = FFT^{-1}(FFT(x) * FFT(y)). \tag{16}$$

Anstelle von $x$ kommt im vorliegenden Beispiel das Signal $Px'''$ und $Py'''$ der Länge 17 (m=17) und anstelle von $y$ kommt die Verschmierungsfunktion $\Lambda$ der Länge 9 (n=9). Somit hat das Resultat die Länge 17+9-1=25 (k=25).

$$Ex_i = conv(Px_i^{''}, \Lambda(f)), \qquad Ey_i = conv(Py_i^{''}, \Lambda(f)) \tag{17}$$

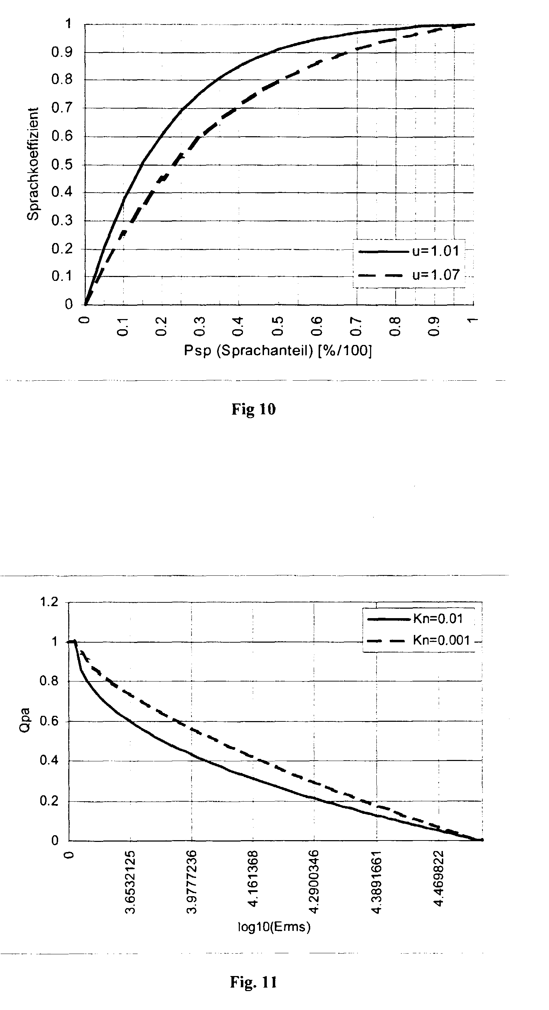

$\Lambda(\cdot)$ ist die Verschmierungsfunktion, deren Form in der Fig. 9 gezeigt wird. Sie ist asymmetrisch. Die linke Flanke steigt auf von einer Lautheit von -30 bei der Frequenzkomponente 1 zu einer Lautheit von 0 bei der Frequenzkomponente 4. Danach fällt sie wieder in einer geraden Linie ab auf eine Lautheit von -30 bei der Frequenzkomponente 9. Die Verschmierungsfunktion ist also eine asymmetrische Dreiecksfunktion.

Die psychoakustische Modellierung 3 (vgl. Fig. 1) ist damit abgeschlossen. Es folgt die Berechnung der Qualität.

Der Abstand zwischen den gewichteten Spektren des Quellsignals und des Empfangssignals wird wie folgt berechnet:

$$Q_{TOT} = \eta_{sp} \cdot Q_{sp} + \eta_{pa} \cdot Q_{pa}, \quad \eta_{sp} + \eta_{pa} = 1 \tag{18}$$

wo $Q_{sp}$ der Abstand während der Sprachphase (aktive Signalphase) ist und $Q_{pa}$ der Abstand in der Pausenphase (inaktive Signalphase). $\eta_{sp}$ ist der Sprachkoeffizient und $\eta_{pa}$ ist der Pausenkoeffizient.

Zuerst wird die Signalanalyse vom Quellsignal durchgeführt mit dem Ziel, Signalsequenzen zu finden, wo die Sprache aktiv ist. So wird ein sogenanntes Energieprofil $En_{profile}$ gebildet nach:

$$En_{profile}(i) = \begin{cases} 1, ... if(x(i) \geq SPEECH\_THR) \\ \\ 0, ... if(x(i) < SPEECH\_THR) \end{cases}$$

Mit SPEECH_THR ist der Schwellenwert definiert, unter welchem die Sprache inaktiv ist. Dieser liegt meistens bei +10 db zur maximalen Dynamik des AD-Konvertors. Bei 16 Bit Auflösung ist SPEECH_THR = - 96.3 + 10 = - 86.3 db. In PACE ist SPEECH_THR = - 80 db.

Die Qualität ist indirekt proportional der Ähnlichkeit $Q_{TOT}$ von Quell- und Empfangssignal. $Q_{TOT}$ = 1 bedeutet, dass Quell- und Empfangssignal genau gleich sind. Für $Q_{TOT}$ = 0 sind diese zwei Signale gar nicht ähnlich. Der Sprach-koeffizient $\eta_{sp}$ wird nach folgender Formel berechnet:

$$\eta_{sp} = -\mu \cdot \left( \frac{\mu - 1}{\mu} \right)^{P_{sp}} + \mu, \ 0 \leq P_{sp} \leq 1 \qquad \qquad \textbf{(19)}$$

wo μ=1.01 und $Psp$ Sprachanteil ist.

Wie die Fig. 10 zeigt, ist der Einfluss der Sprachsequenz grösser (Sprachkoeffizient grösser) wenn der Sprachanteil grösser ist. So bei μ=1.01 und Psp=0.5 (50%) ist dieser Koeffizient $\eta_{sp}$ = 0.91. So ist der Einfluss der Sprachsequenz im Signal 91% und der Pausensequenz nur 9% (100-91). Bei μ=1.07 ist der Einfluss der Sprachsequenz kleiner (80%).

Danach wird der Pausenkoeffizient berechnet nach:

$$\eta_{pa} = 1 - \eta_{sp} \qquad \qquad \textbf{(20)}$$

Die Qualität in der Pausenphase wird nicht in gleicher Weise berechnet wie die Qualität in der Sprachphase.

$Q_{pa}$ ist die Funktion der Signalenergie in der Pausenphase. Wenn diese Energie zunimmt, wird der Wert $Q_{pa}$ kleiner (was der Verschlechterung der Qualität entspricht):

$$Q_{pa} = -k_n \cdot \left( \frac{k_n + 1}{k_n} \right)^{\frac{\log 10(E_{pa})}{\log 10(E_{max})}} + k_n + 1 + m \qquad \qquad \textbf{(21)}$$

$k_n$ ist eine vordefinierte Konstante und hat hier den Wert 0.01. $E_{pa}$ ist die RMS-Signalenergie in der Pausenphase für das Empfangssignal. Erst wenn diese Energie grösser als die RMS-Signalenergie in der Pausenphase im Quellsignal ist, hat es einen Einfluss auf den $Q_{pa}$ Wert. Also $E_{pa}$ = max($Eref_{pa}$,$E_{pa}$). Der kleinste $E_{pa}$ ist 2. $E_{max}$ ist die maximale RMS-Signalenergie bei gegebener digitaler Auflösung (für 16-Bit Auflösung ist $E_{max}$ =32768). Der Wert m in der Formel (21) ist der Korrekturfaktor für $E_{pa}$ =2, so dass dann $Q_{pa}$ =1 ist. Dieser Korrekturfaktor wird so berechnet:

$$m = k_n \cdot \left( \frac{k_n + 1}{k_n} \right)^{\frac{\log 10(E_{\min})}{\log 10(E_{\max})}} - k_n \tag{22}$$

Bei $E_{\max}$ =32768, $E_{\min}$ =2 und $k_n$ =0.01 ist der Wert für m=0.003602. Im wesentlichen kann die Basis kn*(kn+1/kn) als geeignet gewählte Konstante A verstanden werden.

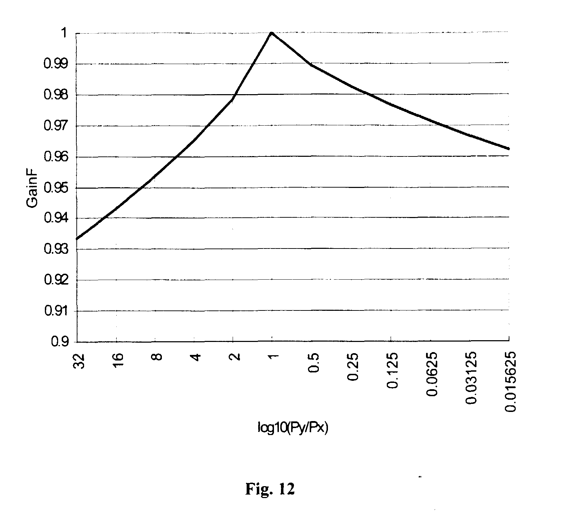

In Fig. 11 ist der Zusammenhang zwischen der RMS-Energie des Signals in der Pausenphase und $Q_{pa}$ dargestellt.

Die Qualität in der Sprachphase wird durch den "Abstand" zwischen den Spektren von Quell- und Empfangssignal bestimmt.

$Q_{sp}$ wird folgendermassen berechnet:

$$Q_{sp} = \frac{1}{M} \sum_{k=1}^{M} \left( \frac{G_k \cdot n \cdot \sum_{j=1}^{n} \left( Ex(k)_j - \overline{Ex(k)} \right) \cdot \left( Ey(k)_j - \overline{Ey(k)} \right)}{\sqrt{n \cdot \sum_{j=1}^{n} Ex(k)_j^2 - \left( \sum_{j=1}^{n} Ex(k)_j \right)^2} \cdot \sqrt{n \cdot \sum_{j=1}^{n} Ey(k)_j^2 - \left( \sum_{j=1}^{n} Ey(k)_j \right)^2}} \right) \tag{23}$$

wo $Ex(k)$ das Spektrum des Quellsignals und $Ey(k)$ das Spektrum des Empfangssignals im Rahmen $k$ ist. Mit $n$ ist die spektrale Auflösung eines Rahmens bezeichnet. Das $n$ entspricht der Anzahl Bark-Werte in einem Zeitrahmen (z.B. 17). M bezeichnet die Anzahl Zeitrahmen des Quellsignals. Das mittlere Spektrum im Rahmen $k$ ist mit $\overline{E(k)}$ bezeichnet. $G_k$ ist die rahmenabhängige Gain-Konstante, deren Wert vom Energieverhältnis $\frac{Py}{Px}$ abhängig ist.

Eine grafische Darstellung des $G_k$-Wertes als Funktion des Energieverhältnisses ist in der Fig. 12 dargestellt.

Wenn dieser Verstärkungsfaktor gleich 1 ist (Energie im Empfangssignal gleich der Energie im Quellsignal) ist auch $G_k$ = 1.

Wenn die Energie im Empfangssignal gleich der Energie im Quellsignal ist, ist $G_k$ gleich 1. Dies hat keinen Einfluss auf das $Q_{sp}$. Alle anderen Werte führen zu kleineren $G_k$ bzw. $Q_{sp}$, was einem grösseren Abstand zum Quellsignal entspricht (Qualität des Empfangssignals kleiner). Wenn die Energie des Empfangssignals grösser als die des Quellsignals ist: log 10($\frac{Py}{Px}$ ) > 1, verhält sich der $G_k$ nach der Gleichung:

$$G_k = 1-0.05 \cdot \left( \log 10\left( \frac{Py}{Px} \right) \right)^{0.7}.$$

Wenn dieses Energieverhältnis log 10($\frac{Py}{Px}$ ) < 1 ist, dann gilt:

$$G_k = 1-0.025 \cdot \left( \log 10\left( \frac{Py}{Px} \right) \right)^{0.7}.$$

Die beschriebene Gain-Konstante bewirkt, dass zusätzliche Inhalte im Empfangssignal den Abstand stärker vergrössern als fehlende Inhalte.

Aus der Formel (23) ist ersichtlich, dass der Zähler der Kovarianz-Funktion entspricht und der Nenner dem Produkt von zwei Standardabweichungen. Also für den $k$-ten Rahmen ist der Abstand gleich:

$$Q_{yp}(k) = G_k \cdot \frac{Cov_k(Px, Py)}{\sigma_x(k) \cdot \sigma_y(k)} \tag{24}$$

In Fig. 2 ist der entsprechende Verarbeitungsabschnitt durch die Abstandsmassberechnung 16 dargestellt. Die Qualitätsberechnung 17 ermittelt den Wert Qtot (Formel 18).

Zu guter Letzt kommt die MOS-Berechnung 5. Diese Konvertierung ist nötig, um $Q_{TOT}$ auf der richtigen Qualitätsskala darstellen zu können. Die Qualitätsskala mit MOS-Einheiten ist in ITU T P.800 "Method for subjective determination of transmission quality", 08/96, definiert. Es wird eine statistisch relevante Zahl von Messungen durchgeführt. Dann werden alle Messwerte als einzelne Punkte in einem Diagramm dargestellt. Dann wird eine Trendkurve in der Form eines Polynoms zweiter Ordnung durch alle Punkte gezeichnet:

$$MOS_O = a \cdot \left(MOS_{PACE}\right)^2 + b \cdot MOS_{PACE} + c \tag{25}$$

Dieser *MOSo* Wert (MOS Objective) entspricht jetzt dem vorgegebenen MOS-Wert. Im besten Fall sind beide Werte gleich.

Das beschriebene Verfahren kann mit dedizierter Hardware und/oder mit Software verwirklicht werden. Die Formeln lassen sich ohne Schwierigkeiten programmieren. Die Verarbeitung des Quellsignals wird im voraus durchgeführt und es werden nur die Ergebnisse der Vorverarbeitung und psychoakustischen Modellierung abgespeichert. Das Empfangssignal kann z.B. on-line verarbeitet werden. Zur Durchführung der Abstandsberechnung der Signalspektren wird auf die entsprechenden abgespeicherten Werte des Quellsignals zurückgegriffen.

Das erfindungsgemässe Verfahren wurde mit verschiedenen Sprachproben unter verschiedenen Bedingungen getestet. Die Länge der Probe variierte zwischen 4 und 16 Sekunden.

Getestet wurden folgende Sprachübertragungen im realen Netz:

- normale ISDN-Verbindung.

- GSM-FR <-> ISDN und GSM-FR alleine.

- verschiedene Übertragungen über DCME -Einrichtungen mit ADPCM (G.726) bzw. LD-CELP (G.728) Codecs.

Alle Verbindungen wurden mit verschiedenen Sprachpegeln angesteuert.

In der Simulation:

- CDMA Codec (IS-95) mit verschiedenen Bitfehlerraten.

- TDMA Codec (IS-54 und IS-641) mit eingeschalteten Echo-Canceller.

- Additive Hintergrundgeräusche und verschiedene Frequenzgänge.

Jeder Test besteht aus einer Reihe von bewerteten Sprachproben und dem zugehörigen auditiven Urteil (MOS). Die erzielte Korrelation zwischen dem erfindungsgemässen Verfahren und den auditiven Werten war sehr hoch.

Zusammenfassend ist festzustellen, dass durch

- die Modellierung der zeitlichen Verdeckung,

- die Modellierung der Frequenz Verdeckung,

- das beschriebene Modell der Abstandsberechnung,

- die Modellierung des Abstands in der Pausenphase und

- die Modellierung den Einfluss des Energieverhältnisses auf die Qualität ein vielseitig anwendbares und sehr gut mit der subjektiven Wahrnehmung korrelierendes Beurteilungssystem geschaffen worden ist.

**Patentansprüche**

1. Verfahren zur Durchführung einer maschinengestützten Beurteilung der Übertragungsqualität von Audiosignalen, insbesondere von Sprachsignalen, wobei in einen Frequenzbereich Spektren eines zu übertragenden Quellsignals und eines übertragenen Empfangssignals bestimmt werden, dadurch gekennzeichnet, dass zur Beurteilung der Übertragungsqualität ein spektraler Ähnlichkeitswert dadurch bestimmt wird, dass die Kovarianz der Spektren des Quellsignals und des Empfangssignals durch das Produkt der Standardabweichung der beiden Spektren dividiert wird.

2. Verfahren nach Anspruch 1, dadurch gekennzeichnet, dass der spektrale Ähnlichkeitswert mit einem Gain-Faktor gewichtet wird, welcher in Abhängigkeit von einem Verhältnis der Energien von Empfangs- und Quellsignal den Ähnlichkeitswert stärker reduziert, wenn die Energie des Empfangssignals grösser ist als die Energie im Quellsignal als wenn die Energie des Empfangssignals kleiner ist.

3. Verfahren nach Anspruch 1 oder 2, dadurch gekennzeichnet, dass aus Quell- und Empfangssignal inaktive Phasen extrahiert werden und dass der spektrale Ähnlichkeitswert nur für die verbleibenden aktiven Phasen bestimmt wird.

4. Verfahren nach Anspruch 3, dadurch gekennzeichnet, dass für die inaktiven Phasen ein Qualitätswert bestimmt wird, welcher in Abhängigkeit von einer Energie Ep in den inaktiven Phasen im wesentlichen folgende Charakteristik aufweist:

$$A^{\frac{\log 10(Epa)}{\log 10(E\,\max)}}$$

5. Verfahren nach den Ansprüchen 3 und 5, dadurch gekennzeichnet, dass die Übertragungsqualität durch eine gewichtete Linearkombination aus dem Ähnlichkeitswert der aktiven Phase und dem Qualitätswert der inaktiven Phase berechnet wird.

6. Verfahren nach einem der Ansprüche 1 bis 5, dadurch gekennzeichnet, dass Quell- und Empfangssignal vor deren Transformation in den Frequenzbereich jeweils so in zeitliche Rahmen aufgeteilt werden, dass die aufeinanderfolgenden Rahmen zu einem wesentlichen Teil von bis zu 50% überlappen.

7. Verfahren nach Anspruch 6, dadurch gekennzeichnet, dass zur Durchführung einer zeitlichen Maskierung zum Spektrum eines Rahmens jeweils das abgeschwächte Spektrum des vorangegangenen Rahmens addiert wird.

8. Verfahren nach Anspruch 7, dadurch gekennzeichnet, dass vor der Durchführung der zeitlichen Maskierung die Komponenten der Spektren komprimiert werden durch Potenzierung mit einem Wert $\alpha<1$.

9. Verfahren nach einem der Ansprüche 1 bis 8, dadurch gekennzeichnet, dass die Spektren von Quell- und Empfangssignal vor der Bestimmung des Ähnlichkeitswertes je mit einer frequenzmässig asymmetrischen Verschmierungsfunktion gefaltet werden.

10. Verfahren nach Anspruch 9, dadurch gekennzeichnet, dass die Komponenten der Spektren vor der Faltung expandiert werden durch Potenzierung mit einem Wert $\varepsilon>1$.

X(i) →□ 1 □→ Y(i)

**Fig. 1**

**Fig. 2**

**Fig. 3**

**Fig. 4**

**Fig. 5**

Filt [dB] / Frequenz [Bark]

**Fig. 6**

Lautstärke [dB] / Frequenz [kHz]

Ln=3 phon N=0 sone

Fig. 7

Fig. 13

**Fig. 8**

**Fig. 9**

**Fig 10**

**Fig. 11**

Fig. 12

Europäisches
Patentamt

**EUROPÄISCHER RECHERCHENBERICHT**

Nummer der Anmeldung

EP 98 81 0589

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | LAM K H ET AL: "OBJECTIVE SPEECH MEASURE FOR CHINESE IN WIRELESS ENVIRONMENT" PROCEEDINGS OF THE INTERNATIONAL CONFERENCE ON ACOUSTICS, SPEECH, AND SIGNAL PROCESSING (ICASSP), DETROIT, MAY 9 - 12, 1995 SPEECH, Bd. 1, 9. Mai 1995, Seiten 277-280, XP000657984 INSTITUTE OF ELECTRICAL AND ELECTRONICS ENGINEERS * Absatz 2 * | 1 | G10L7/02 |
| A | HANSEN J H L ET AL: "OBJECTIVE SPEECH QUALITY ASSESSMENT AND THE RPE-LTP CODING ALGORITHM IN DIFFERENT NOISE AND LANGUAGE CONDITIONS" JOURNAL OF THE ACOUSTICAL SOCIETY OF AMERICA, Bd. 97, Nr. 1, 1. Januar 1995, Seiten 609-627, XP000491242 * Absatz I * | 1 | |
| A | SHIHUA WANG ET AL: "AN OBJECTIVE MEASURE FOR PREDICTING SUBJECTIVE QUALITY OF SPEECH CODERS" IEEE JOURNAL ON SELECTED AREAS IN COMMUNICATIONS, Bd. 10, Nr. 5, 1. Juni 1992, Seiten 819-829, XP000274717 * Absatz IV * | 1 | RECHERCHIERTE SACHGEBIETE (Int.Cl.6) G10L |
| A | US 4 860 360 A (BOGGS GEORGE J) 22. August 1989 * Spalte 2, Zeile 30 - Spalte 3, Zeile 50 * | 1 | |

Der vorliegende Recherchenbericht wurde für alle Patentansprüche erstellt

| Recherchenort | Abschlußdatum der Recherche | Prüfer |
|---|---|---|
| DEN HAAG | 28. Oktober 1998 | Krembel, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

ANHANG ZUM EUROPÄISCHEN RECHERCHENBERICHT
ÜBER DIE EUROPÄISCHE PATENTANMELDUNG NR.

EP 98 81 0589

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-10-1998

| Im Recherchenbericht angeführtes Patentdokument | Datum der Veröffentlichung | Mitglied(er) der Patentfamilie | Datum der Veröffentlichung |
|---|---|---|---|
| US 4860360 A | 22-08-1989 | KEINE | |

EPO FORM P0461

Für nähere Einzelheiten zu diesem Anhang : siehe Amtsblatt des Europäischen Patentamts, Nr.12/82